# EUROPÄISCHE PATENTSCHRIFT

(11) **EP 0 829 346 B1**
(45) Veröffentlichungstag und Bekanntmachung des Hinweises auf die Patenterteilung: **21.04.2004**
(21) Anmeldenummer: 97710018.9
(22) Anmeldetag: 23.08.1997
(51) Int. Cl.: B32B 31/00, B32B 33/00, B32B 3/04, B32B 5/18, B32B 18/00, B32B 27/14, F16L 59/02

(54) **Wärmedämmformkörper**
Shaped thermally insulating article
Corps moulé calorifuge

(30) Priorität: 05.09.1996 DE 19635971
(43) Veröffentlichungstag der Anmeldung: 18.03.1998
(73) Patentinhaber: Porextherm-Dämmstoffe GmbH, 87448 Waltenhofen (DE)
(72) Erfinder: Gabriel, Reinhard, 87448 Waltenhofen (DE); Reisacher, Hannes, 87471 Durach (DE)
(74) Vertreter: Fiener, Josef

(56) Entgegenhaltungen:
- WO-A-98/26928
- DE-A- 2 712 625
- US-A- 4 511 612

## Beschreibung

Die Erfindung betrifft einen mikroporösen verpreßten Wärmedämmformkörper, insbesondere für Hochtemperatureinsatz, im wesentlichen bestehend aus einem Grundkörper aus hochdispersem Kieselsäureaerogel und/oder Metalloxyden mit Faserverstärkung und Trübungsmittel und einer Umhüllung aus schrumpffähigen Kunststofffolien.

In der DE-C2 41 06 727 ist ein Verfahren zur Herstellung derartiger Wärmedämmkörper beschrieben. Hierbei wird auf den vorher ohne Zuhilfenahme einer Umhüllung verpreßten Grundkörper eine teilweise oder vollkommene Umhüllung aus einer schrumpffähigen Kunststoffolie aufgeschrumpft. Der Grundkörper kann dabei auch mit einer Metallfolie umhüllt sein. Zum Ausgleich der hohen Wärmeleitfähigkeit der Metallumhüllung muß der Grundkörper natürlich stärker bemessen sein, was die Schmiegsamkeit des Wärmedämmkörpers beeinträchtigt.

Aus der DE 27 29 609 A1 ist ein aus einem Gemisch aus pyrogener Kieselsäure und Trübungsmittel hergestellter Wärmedämmkörper bekannt. Das Gemisch wird hierbei in eine aus Flachmaterial bestehende Umhüllung, wie einen Schlauch, kontinuierlich eingefüllt und der gefüllte Schlauch ohne Durchtrennung quer zur Schlauchlängsrichtung abgeteilt und unter Wärmeeinwirkung auf die Hülle zu einem Plattenstrang verpreßt. Der Schlauch soll nach einer Durchführungsart des Verfahrens aus zwei im Bereich der Füllung zusammenlaufenden Einzelbahnen des Flachmaterials durch Verbinden an den Seitenrändern gebildet werden.

Die DE 2 712 625 A1 beschreibt ein Verfahren zur Herstellung von Isolierplatten aus einem Gemisch von feindisperser Kieselsäure und einem Trübungsmittel. Das feindisperse Material wird hierbei in einen Sack eingefüllt und beim Preßvorgang wird die Umhüllung auf eine bestimmte Temperatur gebracht, sodaß sie nachher das Kernmaterial unter Spannung umschließt. Für Kältedämmplatten werden Schrumpffolien und für Wärmedämmplatten Glasgewebe zur Umhüllung verwendet. Glasfasern bzw. -gewebe haben eine geringe Biegefestigkeit und Scheuerbeständigkeit und werden bei 500° C brüchig. Letzteres beschränkt die Anwendung der damit umhüllten Wärmedämmplatten auf Niedertemperaturbereiche. Auch können sich in ihrer rauhen und porösen Oberfläche die pulvrigen Dämmwerkstoffe leicht verankern, sodaß sie Biegebeanspruchungen, sei es bei einseitiger Hitzeeinwirkung oder beim Verbiegen, zu Bruch gehen. Selbst schon beim Schrumpfvorgang kann dieses geschehen.

Dieses trifft auch für die in der DE 2 928 695 A1 beschriebenen, mit einem Gewebesack aus Quarzfasern umüllten Wärmeisolierkörper zu. Zur Vermeidung dieser Nachteile ist gemäß der Lehre dieser Druckschrift ein Gleitmittel in Form von Dispersionen wie Emulsionen oder Suspensionen, Pasten oder Pulvern vorgesehen. Diese werden auf die Innenseite der Umhüllung aufgetragen, was umständlich und zeitraubend ist und das Produkt erheblich verteuert. Auch kann sich die aufgetragene Schicht beim Einfüllen des Dämmwerkstoffs leicht verklumpen und Ausschuß verursachen. Vor allem jedoch kann das Trennmittel die Poren der angrenzenden Materialschichten verlegen, so daß eine geringere Wärmedämmung in Kauf genommen werden muß. Dem könnte zwar durch eine entsprechend größere Plattendicke abgeholfen werden, welche jedoch wiederum keine größeren Verbiegungen zuläßt.

Da feindisperses Pulver wie das Gemisch aus pyrogener Kieselsäure und Trübungsmittel nicht fließfähig ist, läßt es sich ferner nach einer Erkenntnis der Erfindung beim Pressen in sackartige Umhüllungen nicht bis in die Randzonen gleichmäßig verpressen, so daß 'bei den nach diesen Verfahren hergestellten Wärmedämmformkörpern eine gleichmäßige Verdichtung nicht gewährleistet ist und besonders die Ränder ausbröseln können. Rissige Ränder bewirken gewöhnlich ein Auseinanderbrechen des Dämmkörpers. Auch kann sich infolge einer ungleichen Verdichtung und damit verbundener Dickungen die Umhüllung nicht überall anschmiegen, so daß eine Rißbildung begünstigende Hohlräume entstehen.

Die Aufgabe der Erfindung besteht darin, Wärmedämmkörper der eingangs genannnten Art mit gleicher Dichte und besserer Schmiegsamkeit zu erzeugen, welche auch bei geringerer Stärke eine verhältnismässig gute Wärmedämmung aufweisen.

Diese Aufgabe wird gelöst durch einen Wärmedämmkörper, erhältlich aus einer vorwiegend aus hochdispersem keramischen Material wie Kieselsäureaerogel (SiO₂) bestehenden Mittelschicht und einer oberen und unteren vorwiegend aus einem biegsamen keramischen Papier, einer keramischen Folie, Pappe oder einem keramischen Vlies als Lagerschichten gebildeten Grundkörper, welcher von einer schrumpffähigen Kunststoffolie umhüllt ist.

Die durch die Erfindung erreichten Vorteile bestehen vor allem in der außerordentlichen Schmiegsamkeit der Wärmedämmkörper. Ohne auseinanderzubrechen lassen sie sich auch an unregelmässige Formen anpassen und und halten dabei auch Verletzungen der Umhüllung weiterhin stand. Sie sind bis 1435° C hitzebeständig und weisen auch darüber hinaus noch eine die hochporöse Masse bindende Eigenschaft auf.

Besonders bei den beidseitigen Lagerschichten aus keramischem Papier bzw. Folien oder Pappe wird bei den verpreßten Massen eine große Gleichmäßigkeit des Gefüges und damit eine große mechanische Festigkeit der Wärmedämmkörper insbesondere von Platten erzielt und Ausschuß bei der Umhüllung vermieden.

Als Umhüllungen kommen Schrumpffolien aus thermisch oder strahlenchemisch vernetzbaren Kunststoffen, vorzugsweise aus Polyäthylen und dgl. in Frage. Diese werden erfindungsgemäß in Form von Folien, Beuteln oder Schläuchen verwendet.

Bei unregelmäßigen Körpern ist eine mittige leicht verformbare Metallfolie von Vorteil, da diese dem Wärmedämmformkörper eine gewisse Formsteifigkeit verleiht.

### Beschreibung

In der Zeichnung ist die Erfindung beispielsweis an Hand einer verpreßten Grundplatte und einer nach der Umhüllung fertiggestellten Wärmedämmplatte veranschaulicht.

### Es zeigen:

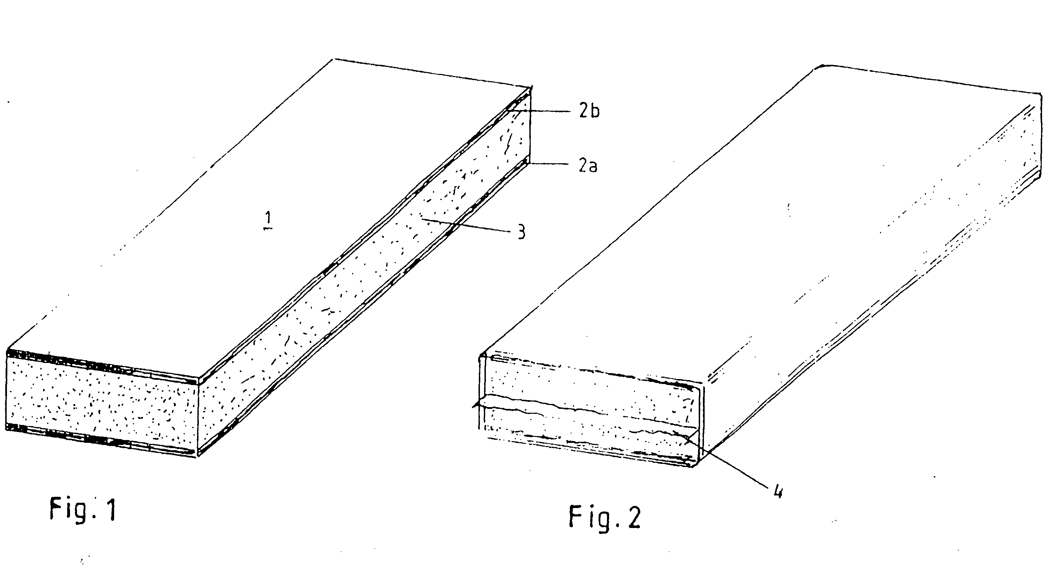

Figur 1 einen Grundkörper,
Figur 2 den umhüllten Grundkörper gemäß Figur 1.

Es bedeuten:
1 Verpreßter Grundkörper
2a -"- untere Lagerschicht aus keramischem Papier
2b -"- obere. "-"
3 Mittelschicht aus einer hochdispersen keramischen Masse
4 Polyäthylenbeutel (Umhüllung)

Die folgenden Beispiele sind bevorzugte Ausführungsformen der Erfindung:

### Beispiel 1:

Ein 8 mm dicke, vorher verpreßte, mikroporöse Grundkörperplatte 1 der Zusammensetzung

| | |
|---|---|
| 63,7 | Gew.-% feinteiliges Metalloxid |
| 30,1 | Gew.-% Trübungsmittel |
| 6,0 | Gew.-% Fasermaterial |
| 0,2 | Gew.-% Härter |

(Mittelschicht) mit oben und unten angefügten mit verpreßten Lagerschichten aus keramischem Papier 2a,2b werden in ihren Abmessungen angepaßte sie leicht aufnehmende Beutel 4 aus einer 7 µm starken Polyäthylenfolie eingeführt und mittels einer Schweißvorrichtung an der offenen Seite verschweißt. Die auf das Förderband aufgelegten umhüllten Wärmedämmkörper werden laufend durch einen Schrumpftunnel hindurchgefördert. Die Gitter des Förderbandes lassen eine allseitige Einwirkung des Heißgases in dem Schrumpftunnel zu.

### Beispiel 2:

Eine nach der Pressung eine 23 mm starke Mittelschicht abgebende Mischung enthaltend

| | |
|---|---|
| 63,7 | Gew.% feinteiligem Metalloxyd |
| 30,1 | Gew.% Trübungsmittel |
| 6,0 | Gew.% Aluminiumfassermaterial |
| 0,2 | Gew.% Härter |

wird oben und unten mit einer 3 mm dicken Lagerschicht aus keramischem Faservlies versehen und in einer Vorrichtung zu einer Grundplatte mit einer Dicke von 25 mm verpreßt.

Die Grundplatten werden auf einem Schweißtisch hintereinander in einen 9 µm dicken Polyäthylenschlauch eingeschoben und zwischen den einzelnen Platten ein Abstand belassen, an dem ein Schweißwerkzeug zum Verschweißen der umhüllten Grundplatten an ihren in Förderrichtung gelegenen Rändern eingesetzt wird. Sodann wird der Schlauch auf ein Förderband aufgeschoben und in einem Schrumpftunnel wird dem Typ des Polyäthylens entsprechend, der von der Art und Menge des zugesetzten Stabilisators abhängt, bei 5...20 Mrad, die Vernetzungsreaktion herbeigeführt. Danach gelangt der Schlauch auf einen Scherentisch, wo die einzelnen umhüllten Wärmedämmformkörper voneinender getrennt werden.

## Patentansprüche

1. Wärmedämmformkörper insbesondere Wärmedämmplatte, **dadurch gekennzeichnet, daß** dieser besteht aus:
a) einem verpreßten Grundkörper (1), im wesentlichen enthaltend
b) eine vorwiegend aus hochdispersem keramischen Material wie Kieselsäureaerogel (SiO₂) bestehenden Mittelschicht (3)
c) einer oberen und unteren aus keramischem Papier, einer keramischen Folie, Pappe, einem keramischen Filz oder Vlies, oder einer Schichtung von wenigstens zwei desselben, bestehenden Lagerschicht (2),
d) der Grundkörper ist von einer schrumpffähigen Kunststoffolie (4) umhüllt.

2. Wärmedämmkörper nach Anspruch 1, **dadurch gekennzeichnet, daß** dieser wenigstens zwei Grundkörper (1) enthält.

3. Wärmedämmkörper gemäß Anspruch 1, **dadurch gekennzeichnet, daß** das keramische Material aus feinporigem Kieselsäureaerogel und/ oder Metalloxyden mit Faserverstärkung und Trübungsmittel und ggf. einem Härter besteht.

4. Wärmedämmformkörper nach Anspruch 1, **dadurch gekennzeichnet, daß** die Umhüllung (4) aus Polyäthylen besteht.

5. Wärmedämmformkörper, nach Anspruch 1, **dadurch gekennzeichnet, daß** die Umhüllung (4) eine Dicke von 4 bis 15 µm aufweist.

6. Wärmedämmformkörper nach mindestens einem der vorhergehenden Ansprüche, **dadurch gekennzeichnet, daß** der Grundkörper (1) ein Glasfasergewebe als Zwischenschicht enthält.

7. Wärmedämmformkörper nach mindestens einem der vorhergehenden Ansprüche, **dadurch gekennzeichnet, daß** der Grundkörper (1) eine verformbare Metallfolie als Zwischenschicht enthält.

8. Verfahren zur Herstellung von Wärmedämmkörpern nach Anspruch 1 und mindestens einem der folgenden Ansprüche, **gekennzeichnet durch** folgende Schritte:
A) Mischen des keramischen Materials der Mittelschicht mit Zuschlagstoffen,
B) Verbringen des keramischen Materials auf die, z.B. in einer Form befindliche, untere Lagerschicht,
C) Gegebenenfalls leichtes Vorpressen der beiden Schichten,
D) Auflegen der oberen Lagerschicht (2a) auf die aufgeschichtete Mittelschicht (3),
E) Pressen dieses Grundkörpers (1),
F) Umhüllen des Grundkörpers mit einer schrumpffähigen Kunststofffolie (4) und
G) Verbringen des umhüllten Grundkörpers in eine Schrumpfvorrichtung.

9. Verfahren nach Anspruch 8, **dadurch gekennzeichnet, daß** der Grundkörper (1) mit einen Polyäthylenbeutel (4) umhüllt wird.

10. Verfahren nach Anspruch 8, **dadurch gekennzeichnet, daß** die Grundkörper (1) in einen Schlauch aus schrumpffähigem Kunststoff in einem für eine Verschweißung erforderlichen Abstand voneinander eingeführt werden und sodann der Schlauch zwischen den Grundkörpern verschweißt und dabei gleichzeitig die umhüllten Wärmedämmformkörper voneinander getrennt und sodann in einem Schrumpftunnel die Folie auf den Grundkörper unter Einwirkung einer Strahlung aufgeschrumpft wird.

11. Verfahren nach Anspruch 8, **dadurch gekennzeichnet, daß** der Grundkörper (1) auf eine von einer Vorratsrolle abgezogene Unterfolie aufgelegt und sodann von einer weiteren Vorratsrolle eine Oberfolie über den Grundkörpern aufgelegt und die Folien mittels Längs- und Querschweißelementen an allen Breit- und Längsseiten miteinander verschweißt und sodann entweder die einzelnen umhüllten Wärmedämmformkörper abgetrennt und in einem Schrumpftunnel die Umhüllung auf die Grundkörper aufgeschrumpft wird oder der Schlauch vor der Abtrennung durch den Schrumpftunnel gefördert wird.

12. Verfahren nach Anspruch 8, **dadurch gekennzeichnet**, der der umhüllte Grundkörper mit einer ionisierenden Strahlung behandelt wird.

13. Verfahren nach Anspruch 8, daß zum Aufschrumpfen in dem Schrumpftunnel Heißgase einwirken.

14. Verfahren nach Anspruch 8, **dadurch gekennzeichnet, daß** bei unregelmäßigen Formen des oder der Grundkörper Klemmen zum Festhalten der Umhüllung eingesetzt werden.

15. Verfahren nach Anspruch 8, **dadurch gekennzeichnet, daß** bei unregelmäßigen Formen der Grundkörper Andrückrollen eingesetzt werden.

## Claims

1. A molded thermal insulator body, especially a heat-insulating panel, **characterized in that** it consists of:
a) a pressed base body (1), essentially comprising:
b) a center layer (3), substantially consisting of a highly dispersed ceramic material such as silica aerogel (SiO₂),
c) upper and lower support layers (2) consisting of ceramic paper, a ceramic foil, cardboard, a ceramic felt or fleece, or a stratification of at least two thereof,
d) the base body being enveloped by a shrinkable plastic foil (4).

2. The molded thermal insulator body according to claim 1, **characterized in that** it includes at least two base bodies (1).

3. The molded thermal insulator body according to claim 1, **characterized in that** the ceramic material is made of a finely porous silica aerogel and/or metal oxides containing a fiber reinforcement and an opacifier, and a hardener, if necessary.

4. The molded thermal insulator body according to claim 1, **characterized in that** the cover (4) is made of polyethylene.

5. The molded thermal insulator body according to claim 1, **characterized in that** the cover (4) exhibits a thickness of from 4 µm to 15 µm.

6. The molded thermal insulator body according to at least one of the preceding claims, **characterized in that** the base body (1) includes a glass fiber fabric as an intermediate layer.

7. The molded thermal insulator body according to at least one of the preceding claims, **characterized in that** the base body (1) includes a deformable metal foil as an intermediate layer.

8. A method for the production of molded thermal insulator bodies according to claim 1 and at least one of the following claims, **characterized by** the following steps:
A) mixing the ceramic material of the center layer with additives;
B) placing the ceramic material onto the lower support layer disposed, for example, in a mold;
C) slightly prepressing the two layers, if necessary;
D) applying the upper support layer (2a) to the stratified center layer (3);
E) pressing this base body (1);
F) enveloping the base body with a shrinkable plastic foil (4); and
G) placing the enveloped base body into a shrinking device.

9. The method according to claim 8, **characterized in that** the base body (1) is enveloped by a polyethylene bag (4).

10. The method according to claim 8, **characterized in that** the base bodies (1) are inserted into a tube made of a shrinkable plastic material at a spacing from each other required for a welding, and the tube is then welded between the base bodies, and simultaneously the enveloped molded thermal insulator bodies are separated from each other, and the foil is then shrunk onto the base body by exposure to an irradiation in a shrinking tunnel.

11. The method according to claim 8, **characterized in that** the base body (1) is placed onto a lower foil stripped off a magazine roll, and then an upper foil from another magazine roll is placed across the base bodies, and the foils are welded together at all their lateral and longitudinal edges by means of longitudinal and transverse welding members, and then the individual enveloped molded thermal insulator bodies are either separated and the envelope is shrunk to the base bodies in a shrinking tunnel, or the tube is delivered through the shrinking tunnel prior to the separation.

12. The method according to claim 8, **characterized in that** the enveloped base body is treated with an ionizing radiation.

13. The method according to claim 8, **characterized in that** the shrink-fitting action in the shrinking tunnel is based on hot gases.

14. The method according to claim 8, **characterized in that** clamps are used to retain the envelope of the base body or bodies having a three-dimensional design.

15. The method according to claim 8, **characterized in that** back-up rollers are used for base bodies of three-dimensional design.

## Revendications

1. Corps moulé calorifuge, en particulier plaque calorifuge, **caractérisé en ce que** celui-ci se compose de :
a) un corps de base injecté ou compressé (1) contenant essentiellement
b) une couche intermédiaire (3) composée principalement d'un matériau céramique fortement dispersé comme un aérogel d'acide silicique (SiO₂),
c) une couche d'appui (2) supérieure et inférieure, composées de papier céramique, d'une feuille céramique, de carton, d'un feutre ou d'un voile céramique, ou d'un empilement d'au moins deux de ceux-ci,
d) le corps de base est enveloppé d'une feuille plastique (4) rétractable.

2. Corps calorifuge selon la revendication 1, **caractérisé en ce que** celui-ci contient au moins deux corps de base (1).

3. Corps calorifuge selon la revendication 1, **caractérisé en ce que** le matériau céramique se compose d'un aérogel d'acide silicique à pores fins et/ou d'oxydes métalliques avec renforcement de fibres et agents opacifiants, et éventuellement d'un durcisseur.

4. Corps calorifuge selon la revendication 1, **caractérisé en ce que** l'enveloppe (4) se compose de polyéthylène.

5. Corps calorifuge selon la revendication 1, **caractérisé en ce que** l'enveloppe (4) présente une épaisseur comprise entre 4 et 15 µm.

6. Corps calorifuge selon au moins l'une des revendications précédentes, **caractérisé en ce que** le corps de base (1) contient un tissu de fibres de verre en tant que couche intermédiaire.

7. Corps calorifuge selon au moins l'une des revendications précédentes, **caractérisé en ce que** le corps de base (1) contient une feuille métallique déformable en tant que couche intermédiaire.

8. Procédé de fabrication de corps calorifuges selon la revendication 1 et au moins une des revendications suivantes, **caractérisé par** les étapes suivantes :
A) mélange du matériau céramique de la couche intermédiaire avec des additifs,
B) application du matériau céramique sur la couche d'appui inférieure, se trouvant par exemple dans un moule,
C) éventuellement légère pré-compression des deux couches,
D) placement de la couche d'appui supérieure (2a) sur la couche intermédiaire (3) déposée par couches,
E) compression de ce corps de base (1),
F) enveloppage du corps de base avec une feuille plastique rétractable (4), et
G) passage du corps de base enveloppé dans un dispositif de rétraction.

9. Procédé selon la revendication 8, **caractérisé en ce que** le corps de base (1) est enveloppé d'un sac de polyéthylène (4).

10. Procédé selon la revendication 8, **caractérisé en ce que** les corps de base (1) sont introduits dans un tuyau en matière plastique rétractable selon un écart entre eux nécessaire pour une soudure, et **en ce que** le tuyau est ensuite soudé entre les corps de base, et simultanément les corps moulés calorifuges enveloppés sont alors séparés l'un de l'autre, puis la feuille est rétractée sur le corps de base dans un tunnel de rétraction sous l'effet d'un rayonnement.

11. Procédé selon la revendication 8, **caractérisé en ce que** le corps de base (1) est posé sur une feuille inférieure tirée d'un rouleau d'alimentation et qu'une feuille supérieure est ensuite placée depuis un autre rouleau d'alimentation au-dessus des corps de base, et les feuilles sont soudées entre elles au moyen d'éléments soudants longitudinaux et transversaux au niveau de tous les côtés latéraux et longitudinaux, puis les différents corps calorifuges enveloppés sont séparés et l'enveloppe est rétractée sur le corps de base dans un tunnel de rétraction, ou le tuyau est transporté par le tunnel de rétraction avant la séparation.

12. Procédé selon la revendication 8, **caractérisé en ce que** le corps de base enveloppé est traité avec un rayonnement ionisant.

13. Procédé selon la revendication 8, **caractérisé en ce que**, pour la rétraction, on fait agir des gaz chauds dans le tunnel de rétraction.

14. Procédé selon la revendication 8, **caractérisé en ce que**, pour des formes irrégulières du ou des corps de base, on utilise des pinces pour maintenir l'enveloppe.

15. Procédé selon la revendication 8, **caractérisé en ce que**, pour des formes irrégulières des corps de base, on utilise des rouleaux presseurs.
